# DEMANDE DE BREVET EUROPEEN

(11) **EP 1 849 534 A2**
(43) Date de publication de la demande: **31.10.2007**
(21) Numéro de dépôt: 07290502.9
(22) Date de dépôt: 24.04.2007
(51) Int. Cl.: B09B 3/00, B23K 26/38

(54) **Procédé pour détruire un corps comportant des parties métalliques recouvertes d'amiante**

(30) Priorité: 28.04.2006 FR 0603817
(71) Demandeur: Roulot, Maurice, 91400 Orsay (FR)
(72) Inventeur: Roulot, Maurice, 91400 Orsay (FR)
(74) Mandataire: Flavenot, Bernard

(57) **Abrégé**

La présente invention concerne les procédés pour détruire un corps comportant des parties métalliques recouvertes d'amiante.

Le procédé selon l'invention se caractérise essentiellement en ce que sa mise en oeuvre comporte les étapes successives suivantes : le découpage du corps par le faisceau d'un générateur laser pour obtenir des morceaux, l'enrobage des morceaux découpés, et la fusion des morceaux enrobés, dans un four fermé.

Application, notamment, à la destruction des parties métalliques amiantées de grands bâtiments comme des navires.

## Description

La présente invention concerne les procédés pour détruire un corps comportant des parties métalliques contenant de l'amiante, qui trouvent des applications particulièrement avantageuses pour la destruction de corps de grand volume comme des navires ou analogues.

Il faut tout d'abord rappeler que l'amiante se trouve, dans la nature, sous forme de roches fibreuses pouvant soutenir des températures élevées jusqu'à environ 900°C. Elle a été utilisée, pendant près de cinquante années, dans l'automobile notamment pour les plaquettes de freins, dans l'industrie comme protection contre les températures élevées lors du soudage du verre et autre, et dans le bâtiment comme protection contre le feu et pour la fabrication de ciments (fibrociments, etc.).

A partir de 1980, l'amiante a été interdite sous toutes ses formes car les fibres, dont les plus fines peuvent avoir un diamètre d'environ 0,02 micron, se logent dans les alvéoles pulmonaires et se transforment au bout de quelques années en cancer ou autre maladie pulmonaire mortelle, du moins fortement invalidante.

La solution actuelle pour détruire un corps recouvert d'amiante, est de procéder tout d'abord au désamiantage par exemple par grattage mécanique de ce corps. Le personnel en charge de ce désamiantage se doit de porter un scaphandre et l'endroit en cours de traitement doit être confiné par des parois comme des voiles ou analogues. L'atmosphère dans cet endroit confiné est continuellement soumise à une aspiration.

Cette solution n'est pas très efficace et demeure dangereuse. En effet, quand on supprime le confinement, malgré l'aspiration, aucun filtre ne peut réellement bloquer les plus petites particules. Or, ces particules ont une durée de vie dans l'air ambiant, de trente mille ans.

En plus, se pose le problème de l'évacuation et du stockage, par exemple par enfouissement, des matériaux récupérés lors du grattage. D'autant plus que, le coût du désamiantage, seul, étant déjà prohibitif, la tentation de la mise en décharge sauvage est alors très forte.

Aussi, la présente invention a pour but de mettre en oeuvre un procédé pour détruire un corps comportant des parties métalliques ou analogues recouvertes par de l'amiante, qui trouve des applications particulièrement avantageuses, pour la destruction de corps de grand volume comme des navires ou analogues, qui pallie en grande partie les inconvénients mentionnés ci-dessus des procédés connus à ce jour.

Plus précisément, la présente invention a pour objet un procédé pour détruire un corps comportant des parties métalliques recouvertes d'amiante, caractérisé en ce que sa mise en oeuvre comporte les étapes successives suivantes :
- découpage du corps à l'aide d'un faisceau laser de puissance pour obtenir des morceaux,
- enrobage des morceaux, et
- fusion des morceaux enrobés, dans un four fermé.

Le procédé peut aussi se caractériser par le fait que l'enrobage des morceaux découpés peut se faire en enfermant les morceaux dans un blister ou analogue, ou en pulvérisant, sur ces morceaux, une couche de vernis ou analogue.

Le générateur laser utilisé pour le découpage du corps est avantageusement un générateur laser de puissance, de 5 à 50 kW, par exemple à fibre orientable.

Avec une puissance de 5kW, il est possible de découper une tôle d'acier de 25 mm d'épaisseur, avec une vitesse de découpe de l'ordre de 1 m/mn.

Un gaz d'isolement, comme de l'air comprimé ou analogue, est avantageusement utilisé pour éloigner des techniciens les éventuelles poussières d'acier et/ou d'amiante et pour faciliter la découpe.

Avec un tel laser, l'amiante qui se trouve au niveau de la découpe est fondue, ce qui la rend inactive.

Quant au four utilisé pour obtenir la fusion des morceaux enrobés, il est avantageusement un four à plasma préférentiellement équipé d'un sas, de préférence incliné, pour éviter, lors de son ouverture, que la chaleur ne renvoie des particules vers l'extérieur.

Ce four est porté à une température de l'ordre de 1400 à 4500 °C, ce qui fond les morceaux comportant l'amiante. Il est ainsi obtenu des lingots d'acier et du laitier d'amiante inoffensif, tous utilisables pour de nombreuses applications.

Le procédé selon l'invention présente certainement de nombreux avantages par rapport aux procédés similaires de l'art antérieur. Notamment, il évite le coût prohibitif du désamiantage et l'évacuation des déchets, il permet de récupérer de l'acier et du laitier d'amiante, il protège l'environnement et les personnes.

## Revendications

1. Procédé pour détruire un corps comportant des parties métalliques recouvertes d'amiante, **caractérisé en ce que** sa mise en oeuvre comporte les étapes successives suivantes :
• découpage du corps par le faisceau d'un générateur laser pour obtenir des morceaux,
• enrobage des morceaux découpés, et
• fusion des morceaux enrobés, dans un four fermé.

2. Procédé selon la revendication 1, **caractérisé en ce que** l'enrobage des morceaux découpés est effectué selon l'un des processus suivants : enfermement dans un blister, pulvérisation d'une couche de vernis.

3. Procédé selon l'une des revendications 1 et 2, **caractérisé en ce que** le générateur laser est un laser de puissance, d'une puissance comprise entre environ 5 à 50 kW.

4. Procédé selon l'une des revendications 1 à 3, **caractérisé en ce que** ledit four est un four à plasma apte à fournir une température de l'ordre de 1400 à 4500 °C.

5. Procédé selon la revendication 4, **caractérisé en ce que** ledit four est équipé d'un sas pour éviter que, lors de son ouverture, la chaleur ne renvoie des particules vers l'extérieur.
